# EUROPEAN PATENT APPLICATION

(11) **EP 1 126 706 A2**
(43) Date of publication of application: **22.08.2001**
(21) Application number: 01103460.0
(22) Date of filing: 14.02.2001
(51) Int. Cl.: H04N 5/92

(54) **Advertisement data supplying method, advertisement data reproducing apparatus, and systems for the same**

(30) Priority: 15.02.2000 JP 2000037279
(71) Applicant: Matsushita Electric Industrial Co., Ltd., Kadoma-shi, Osaka 571-8501 (JP)
(72) Inventor: Gotoh, Shouichi, Ibaraki-shi, Osaka 567-0042 (JP); Kuno, Yoshiki, Moriguchi-shi, Osaka 570-0054 (JP); Ayaki, Yasushi, Neyagawa-shi, Osaka 575-0037 (JP); Yamada, Masazumi, Osaka-shi, Osaka 543-0071 (JP); Yanagisawa, Ryogo, Osaka-shi, Osaka 547-0035 (JP); Nishimura, Takuya, Osaka-shi, Osaka 567-0042 (JP); Takechi, Hideaki, Toyonaka-shi, Osaka 567-0042 (JP)
(74) Representative: Grünecker, Kinkeldey, Stockmair & Schwanhäusser Anwaltssozietät

(57) **Abstract**

An advertisement supplying method, characterized in that an area for recording advertisement data is crated in a large-capacity recording medium, advertisement data which are to be reproduced when an audience watch a program are recorded in said area in advance, and said large-capacity recording medium is thereafter provided.

## Description

### BACKGROUND OF THE INVENTION

### Field of the Invention

The present invention relates to a method of supplying CM data for digital broadcasting, an advertisement data reproducing apparatus, and a system for the same, etc.

### Related Art of the Invention

In digital broadcasting, digital data of a plurality of programs compressed at a high efficiency are time-division multiplexed into a digital broadcast wave and broadcasted through satellite broadcasting or the like. Digital broadcasting has already been realized in some countries. Japan is in a stage of discussing and studying various technologies, aiming at actual implementation.

In general, one has to pay a charge to watch a program which is such multiplexed digital broadcast data, and a user who has subscribed in advance or a user who pays for each program is allowed to watch. Meanwhile, other approach under consideration is to broadcast programs, like conventional television and radio programs provided by commercial broadcasting stations, which include inserted commercials and therefore do not accompany accounting, or to broadcast lower-charge programs than programs which do not include inserted commercials.

Generally used as a method of inserting commercials is a method which requires to treat CM data as a part of program data and transfer, record, reproduce or otherwise appropriately process the program data and the commercial data as one.

Meanwhile , in the case of digital broadcasting as described above, since far more programs are broadcasted at the same as compared with a conventional analog telecast, it becomes increasingly difficult for a user to watch all programs the user wishes in real time. Hence, chances are that a viewing method that a user temporarily records programs in a storage device and reproduces to watch at pleasure will become essential. As a storage device, an HDD is becoming more popular as a device for digital recording of visuals in accordance with an increase in storage capacity.

However, as program data and CM data are integrated as one as described above, there is a problem that when a channel is switched or a program is reproduced after recorded in a storage device, advertisements placed by sponsors which present the program may be forwarded or skipped so that a broadcasting company may see a decrease in revenue from sponsors due to a decreasing audience rating on advertisements.

Further, since advertisements placed by sponsors which sponsor a program are customarily aired only toward the general public, which group (by gender, age, occupation, etc.) of the audience sees which advertisement is not known, nor a level of effect is. Thus , a problem is that sponsors can not create highly favorable advertisements to an audience or can not grasp in detail which program to sponsor in order to have a target user audience see advertisements.

### SUMMARY OF THE INVENTION

Considering the problems with the conventional technique as above, the present invention accordingly aims at providing a method of supplying advertisements, an advertisement data reproducing apparatus , etc. , with which it is possible to present advertisements desired by an audience targeting at each group of the audience, to present more favorable advertisements, and to prevent a drop in audience rating on advertisements.

The 1^{st} invention of the present invention is an advertisement supplying method, characterized in that an area for recording advertisement data is crated in a large-capacity recording medium, advertisement data which are to be reproduced when an audience watch a program are recorded in said area in advance, and said large-capacity recording medium is thereafter provided.

The 2^{nd} invention of the present invention is an advertisement data supplying method, characterized in that a large-capacity recording medium in which a free area for recording advertisement data is created is provided, and after providing said medium, advertisement data which are to be reproduced when an audience watch a program are recorded in said free area of said large-capacity recording medium.

The 3^{rd} invention of the present invention is the advertisement data supplying method of 1^{st} invention, characterized in that for updating said advertisement data which are recorded in advance in said area for recording advertisement data, said advertisement data are provided by either one of or combination of a method which requires to load from a channel which is dedicated to advertisement data, a methodwhich requires to load from the same channel for program data during an unoccupied period of said program data, a method which requires to extract from advertisement data which are added to program data and thereafter load, a method which requires to load through a different communication system from broadcasting of program data.

The 4^{th} invention of the present invention is the advertisement data supplying method of 2^{nd} invention,
characterized in that said advertisement data are provided by either one of or combination of a method which requires to load from a channel which is dedicated to advertisement data, a method which requires to load from the same channel as program data during an unoccupied period of said program data, a method which requires to extract from advertisement data which are added to program data and thereafter load, a method which requires to load through a different communication system from broadcasting of program data.

The 5^{th} invention of the present invention is the advertisement data supplying method of 2^{nd} or 4^{th} inventions, characterized in that the capacity of said free area can be changed.

The 6^{th} invention of the present invention is an advertisement data reproducing apparatus, characterized in comprising advertisement data reproducing means which reads said advertisement data from said large-capacity recording medium which is used in the advertisement supplying method of 1^{st} or 2^{nd} inventions, and displays said advertisement data, for a predetermined period or all the times, in a partial area of a displayed view of program data which area being received.

The 7^{th} invention of the present invention is an advertisement data reproducing apparatus, characterized in comprising advertisement data reproducing means which reads said advertisement data from said large-capacity recording medium which is used in the advertisement supplying method of 1^{st} or 2^{nd} inventions, replaces advertisement data inserted in program data or a part or entirety of empty data with said recorded advertisement data during broadcasting of program data which are being received, and reproduces said recorded advertisement data.

The 8^{th} invention of the present invention is the advertisement data reproducing apparatus of 7^{th} invention, characterized in that replacement of said advertisement data is performed using an advertisement beginning/ending flag which is created in a packet header of said program data.

The 9^{th} invention of the present invention is an advertisement data reproducing apparatus, characterized in comprising advertisement data reproducing means which reads said advertisement data from said advertisement data area of said large-capacity recording medium which is used in the advertisement supplying method of 1^{st} or 2^{nd} inventions, and displays said advertisement data, during reproduction of program data which are recorded in said large-capacity recording medium, for a predetermined period or all the times, in a partial area of a displayed view of said program data.

The 10^{th} invention of the present invention is an advertisement data reproducing apparatus, characterized in comprising advertisement data reproducing means which reads said advertisement data from said advertisement data area of said large-capacity recording medium which is used in the advertisement supplyingmethod of 1^{st} or 2^{nd} inventions, and during reproduction of program data which are recorded in said large-capacity recording medium, inserts and reproduces said advertisement data in said program data which are being reproduced.

The 11^{th} invention of the present invention is the advertisement data reproducing apparatus of 9^{th} invention, characterized in that said advertisement data reproducing means replaces advertisement data already added to said program data with said advertisement data of said advertisement data area and reproduces said advertisement data of said advertisement data area.

The 12^{th} invention of the present invention is the advertisement data reproducing apparatus of any one of 6^{th} through 11^{th} inventions, characterized in that said advertisement data are recorded in said advertisement data area or updated by either one of or combination of a method which requires to load from a channel which is dedicated to advertisement data, a method which requires to load from the same channel as program data during an unoccupied period of said program data, a method which requires to extract from advertisement data which are added to program data and thereafter load, a method which requires to load through a different communication system from broadcasting of program data.

The 13^{th} invention of the present invention is the advertisement data reproducing apparatus of 10^{th} or 11^{th} inventions, characterized in that insertion or replacement of said advertisement data is performed using an advertisement beginning/ending flag which is created in a packet header of said program data.

The 14^{th} invention of the present invention is the advertisement data reproducing apparatus of any one of 6^{th} through 13^{th} inventions, characterized in that an identifier not for inhibiting to display advertisement data is added to a packet header of said program data.

The 15^{th} invention of the present invention is the advertisement data reproducing apparatus of any one of 6^{th} through 14^{th} inventions, characterized in comprising information of interest inputting means which inputs information of interest which an audience have regarding advertisements.

The 16^{th} invention of the present invention is the advertisement data reproducing apparatus of any one of 6^{th} through 15^{th} inventions, characterized in comprising:
advertisement information managing means of managing ID information of advertisement data which were reproduced, forwarded without reproducing, or skipped without reproducing; and
advertisement information storing/sending means of internally storing at least said ID information or sending at least said ID information to outside.

The 17^{th} invention of the present invention is the advertisement data reproducing apparatus of 16^{th} invention, characterized in that with a predetermined condition set, it is possible to forward or skip advertisement data without reproducing.

The 18^{th} invention of the present invention is an advertisement data reproducing system, characterized in comprising an advertisement control center which receives information regarding reproduction of advertisements from said advertisement information storing/sending means of the advertisement data reproducing apparatus of 16^{th} or 17^{th} inventions and manages and sends advertisement data based on said information received.

The 19^{th} invention of the present invention is a sponsor system, characterized in comprising a sponsor apparatus which determines a user who is to be provided with the contents of an advertisement and/or an advertisement, based on said information regarding reproduction of advertisements received from said advertisement information storing/sending means of the advertisement data reproducing apparatus of 16^{th} or 17^{th} inventions or from said advertisement control center of the advertisement data reproducing system of 18^{th} invention.

The 20^{th} invention of the present invention is a program recording medium which can be read with a computer and which stores a program and/or data for executing with a computer all or some operations at all or some steps of the advertisement data supplying method of any one of 1^{st} through 5^{th} inventions.

The 21^{st} invention of the present invention is a program recording medium which can be read with a computer and which stores a program and/or data for executing with a computer all or some functions of all or some means of the advertisement data reproducing apparatus of any one of 6^{th} through 17^{th} inventions.

### BRIEF DESCRIPTION OF THE DRAWINGS

[Fig. 1] Fig. 1 is a structure diagram of the advertisement data reproducing apparatus according to the first preferred embodiment of the present invention.

[Fig. 2] Fig. 2 is a drawing for describing a method of providing CM data in the first preferred embodiment.

[Fig. 3] Fig. 3 is a drawing for describing program data which are being received and CM data which are recorded in an HDD in the first preferred embodiment.

[Fig. 4] Fig. 4 is a drawing for describing a method of reproducing CM data while receiving a broadcast in the first preferred embodiment.

[Fig. 5] Fig. 5 is a drawing showing an example of displayed CM data in the first preferred embodiment.

[Fig. 6] Fig. 6 is a drawing for describing program data and CM data which are recorded in an HDD during reproduction of stored program data in the first preferred embodiment.

[Fig. 7] Fig. 7 is a drawing for describing a method of reproducing CM data during reproduction of stored program data in the first preferred embodiment.

[Fig. 8] Fig. 8 is a structure diagram of the advertisement data reproducing apparatus according to the second preferred embodiment of the present invention.

[Fig. 9] Fig. 9 is a schematic structure diagram of the advertisement data reproducing system according to the third preferred embodiment of the present invention.

### Explanation of the Reference Symbols

- 1: STB
- 2: tuner
- 3: data separation unit
- 4: data synthesizing unit
- 5: recording/reproducing unit
- 6: HDD
- 7: CM data area
- 8: AV decoder
- 9: control unit
- 10: transport decoder
- 14: CM information managing unit
- 15: user information inputting unit
- 16: modem
- 17: control center

### PREFERRED EMBODIMENTS OF THE INVENTION

In the following, the present invention will be described with reference to drawings which illustrate preferred embodiments.

### (First Preferred Embodiment)

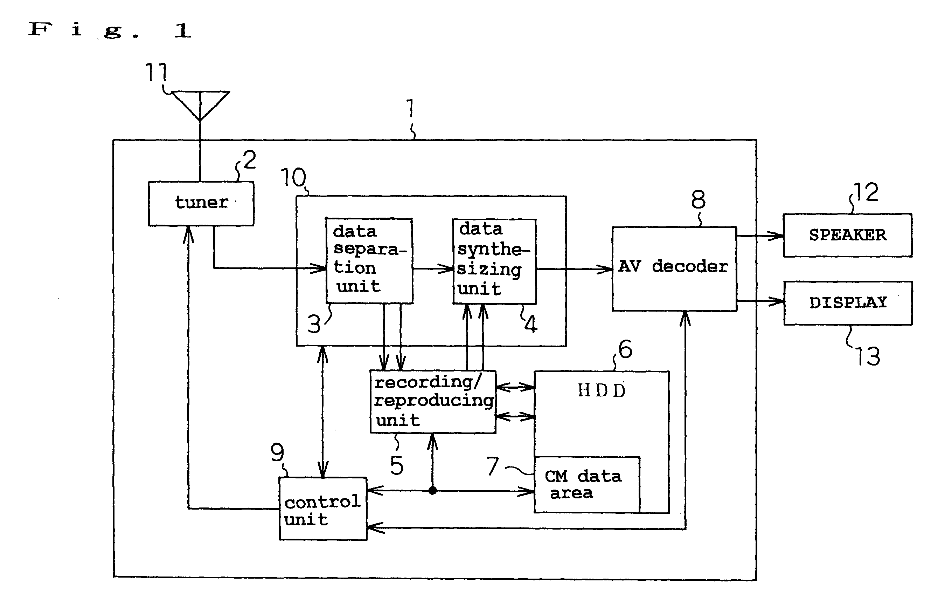

Fig. 1 is a structure diagram of an advertisement data reproducing apparatus according to a first preferred embodiment of the present invention.

In Fig. 1, a set top box (hereinafter "STB") 1 which serves as an advertisement data reproducing apparatus comprises : a tuner 2 which receives a digital television broadcast wave from a broadcasting station through an antenna 11 and converts into a signal which can be used within the STB 1; a data separation unit 3 which separates program data and advertisement data (hereinafter referred to as "CM data") from each other which are multiplexed as digital broadcast data, in accordance with data attributes information which is sent together with the digital broadcast data; a hard disk device (hereinafter abbreviated to as "HDD") 6 which records and stores the separated program data and CM data; a recording/reproducing unit 5 which records and reproduces the program data and the CM data in and from the HDD 6; a data synthesizing unit 4 which synthesizes data reproduced from the HDD 6 by the recording/reproducing unit 5 with data from the data separation unit 3; an AV decoder 8 which decodes data processed by high-efficiency encoding and received from the data synthesizing unit 4 and outputs to a speaker 12 and a display 13; and a control unit 9 which controls operations of these respective units.

The HDD 6 includes a CM data area 7 which is dedicated to recording of CM data. Other areas are used to record program data. A part of the data synthesizing unit 4, a part of the recording/reproducing unit 5 and a part of the AV decoder 8 form advertisement data reproducing means , whereas a part of the data separation unit 3 and a part of the recording/reproducing unit 5 form advertisement data recording means in the present invention. Meanwhile, the data separation unit 3 and the data synthesizing unit 4 form a transport decoder 10.

As a method of supplying CM data to be recorded in the CM data area 7 of the HDD 6, there are generally two types of methods as described below.

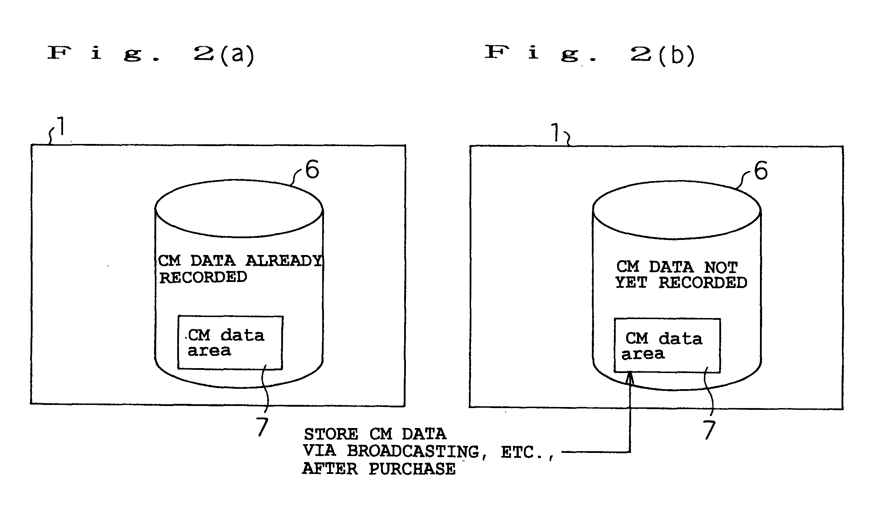

One is a method which requires that broadcasting companies or the like records in advance CM data in the CM data area 7 of the HDD 6 which is built within the STB 1 and users purchase the STBs 1 which therefore include the recorded CM data, as shown in Fig. 2(a). With the CM data ensured to be inserted without fail when an audience watch programs, sponsors can present advertisements which will be watched without fail while the broadcasting companies or the like can collect advertising charges from the sponsors without fail and therefore set a cheaper purchase price of the STBs 1 to users.

The other is a method which requires that the STB 1 is provided in a condition that the CM data area 7 of the HDD 6 which is built within the STB 1 is free, and after a user purchases the STB 1, CM data are automatically recorded in the CM free data area 7, as shown in FIg. 2(b).

A method of recording CM data afterward may be a method which requires to separate and record CM data which are inserted in program data which are being aired, a method which requires that a broadcasting company always downloads to the HDD 6 through a channel dedicated to CM data and updates CM data, a method which requires that utilizing an unoccupied period in a broadcasted program, a certain volume of CM data are sent at once late at night after the day's broadcast on a channel, for instance, and the CM data are recorded, a method which requires to download CM data to particular users depending on age, gender, geographical region, etc., a method which requires to send CM data via a different communication system, e.g., a telephone line, from a television broadcast and to record the CM data, or other method.

Further, with respect to the CM data area 7 in the HDD 6, there may be a situation that the capacity of the CM data area 7 is fixed and a situation that the capacity of the CM data area 7 is variable. Where the CM data area 7 is fixed, it is possible that a broadcasting company or the like sells or lends the CM data area 7 to more than one sponsors so that the sponsors can use the CM data area 7. Where the CM data area 7 is variable, it is possible for instance that a purchase price of the STB1 may be inexpensive although the larger the CM data area 7 is, the smaller a program data area is.

Next, operations of the advertisement data reproducing apparatus according to the first preferred embodiment will be described with reference to the associated drawings.

First, when a digital broadcast wave is to be received and program data and CM data are to be recorded in the HDD 6, the tuner 2 amplifies a digital broadcast wave which is received through the antenna 11, and after frequency conversion, reshapes and demodulates a signal waveform, corrects an error in the signal, and outputs to the data separation unit 3 as digital broadcast data to be used inside the apparatus. The data separation unit 3 separates the digital broadcast data, which are multiplex data of program data and CM data, received from the tuner 2 into the program data and the CM data and outputs to the recording/reproducing unit 5. The recording/reproducing unit 5 records the separated program data in the program data area in the HDD 6 and the CM data in the CM data area 7.

Meanwhile, where a user receives a broadcast and watches a program in real time, as the user selects a desired program using operation means (not shown), the control unit 9 allows the data separation unit 3 to select and output the program to the data synthesizing unit 4 based on this. The data synthesizing unit 4, if there are data to be synthesized, sends the synthesized data to the AV decoder 8 so that the AV decoder 8 decodes the data and outputs the data to the speaker 12 and the display 13.

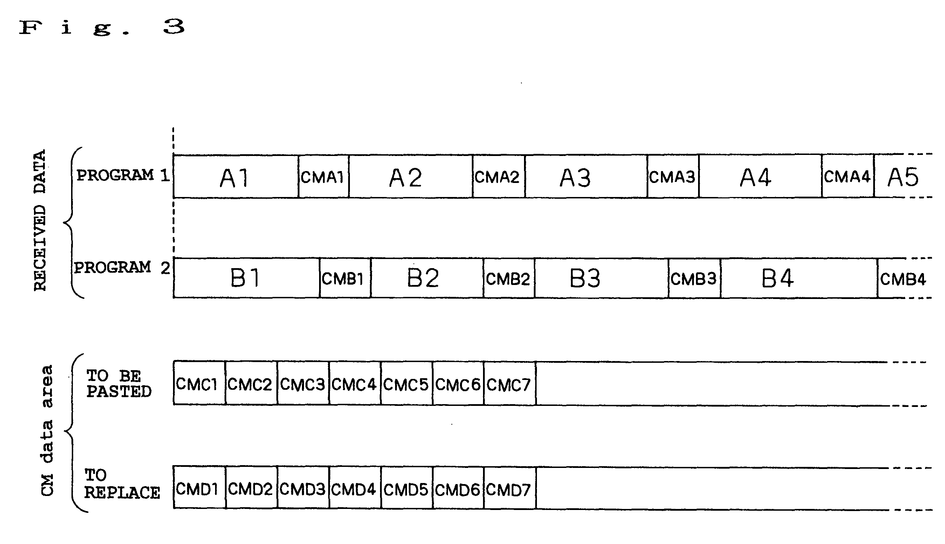

Fig. 3 shows that there are two programs (channels) being broadcasted, one being a program 1 whose data stream is a A1, CMA1, A2, CMA2, ... and the other being a program 2 whose data stream is B1, CMB1, B2, CMB2, ... (For a simple description, Fig. 3 shows only two programs although there are a large number of programs in reality.). Further, the CM data area 7 of the HDD 6 holds CM data which were already recorded by any one of the methods described earlier. The CM data are recorded separately in two groups, one being CMC1, CMC2, ... to be pasted and the other being CMD1, CMD2, ... for replacing, as described later. In the above, An and Bn denote the program data, while CMAn and CMBn denote the CM data.

Next, a description will be given on reproduction of CM data in a case that a user receives a broadcast and watches a program in real time.

As a user turns on a television set and chooses the program 1, the tuner 2 selects data representing the program 1 and sends the data to the data separation unit 3, and the data representing the program 1 are forwarded further to the data synthesizing unit 4. The control unit 9 controls the recording/reproducing unit 5 so that the recording/reproducing unit 5 reproduces CM data to be pasted from the CM data area 7 of the HDD 6 and sends the data to the data synthesizing unit 4. The data synthesizing unit 4 synthesizes the data representing the program 1 with the CM data to be pasted and sends the data to the AV decoder 8, and the AV decoder 8 decodes the received data and supplies the data to the speaker 12 and the display 13.

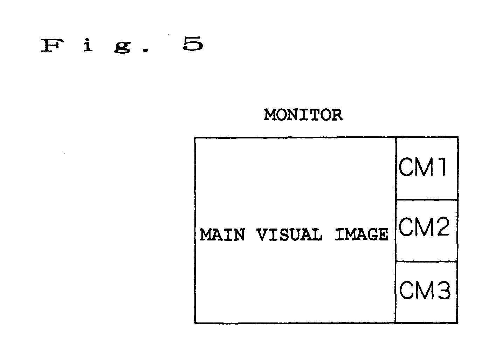

As a result of this, as a displayed view on the display 13, CM views of CM1, CM2 and CM 3 are displayed in a partial area of a main visual image as shown in Fig. 5, for example. The CM data to be pasted are reproduced at the time that a television set is turned on or a channel is switched, for example . In a similar manner, a banner advertisement can be pasted on a displayed view.

Next, as an advertisement beginning/ending flag regarding advertisements is inserted by the broadcasting station in a transport packet header of the program data, the control unit 9 in accordance with the advertisement beginning/ending flag causes the recording/reproducing unit 5 to reproduce replacing CM data from the CM data area 7 of the HDD 6 and sends the replacing CM data to the data synthesizing unit 4, whereby CM data inserted in the program data are replaced with the replacing CM data which were reproduced.

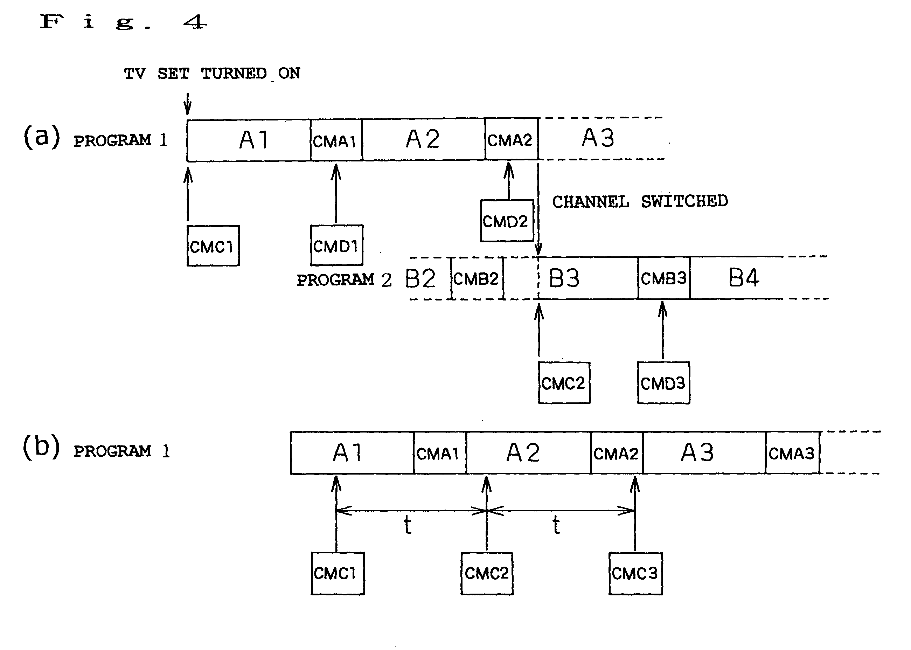

In this manner, as shown in Fig. 4(a), the CM data piece CMC1 to be pasted is synthesized at the beginning of the program data piece A1 of the program 1 upon turning on of the television set, the CM data piece CMC2 to be pasted is synthesized at the beginning of the program data piece B3 of the program 2 upon switching among the channels, the CM data pieces CMA1 and CMA2 in the program 1 are replaced with the replacing CM data pieces DMA1 and DMA2, respectively, and the CM data piece CMB3 in the program 2 is replaced with the replacing CM data piece CMD3.

In consequence, the CM data to be pasted and the replacing CM data are displayed on the display. The replacement may be empty data with the advertisement beginning/ending flag regarding advertisements inserted.

Further, as shown in Fig. 4(b), the CM data pieces CMC1, CMC2 and CMC3 to be pasted may be reproduced and displayed in a partial area of a main visual image for every certain time period t such as five minutes and ten minutes. In the above, the CM data to be pasted and the replacing CM data maybe reproduced in any desired order.

Next, a description will be given on reproduction of CM data in a case that program data recorded in the program data area in the HDD are to be reproduced.

As described above, since far more programs are broadcasted at the same time in digital broadcasting as compared to a conventional analog telecast, it is difficult for a user to watch all desired programs in real time. Hence, it is likely that the user temporarily records programs in a storage device such as an HDD and reproduces to watch at pleasure in many cases. In order to have users watch advertisements, therefore, it is necessary to insert as much advertisement as possible during reproduction of program data.

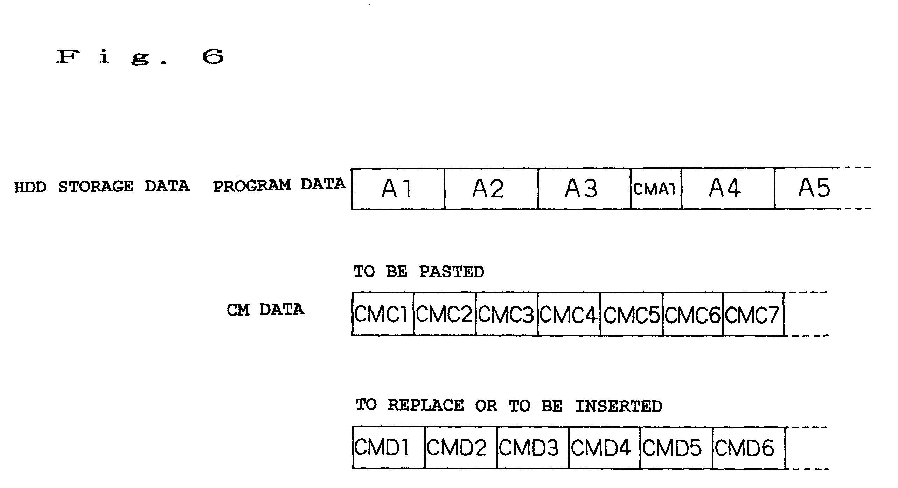

Fig. 6 is a view showing an example of the program data pieces A1, A2, ... stored in the program data area and the CM data pieces CMC1, CMC2, ... CMD1, CMD2, ... stored in the CM data area 7. For simplicity of the description, Fig. 6 is simplified. In addition, as described earlier, the CM data are recorded separately in two groups, one being data pieces to be pasted and the other being replacing (inserting) data pieces.

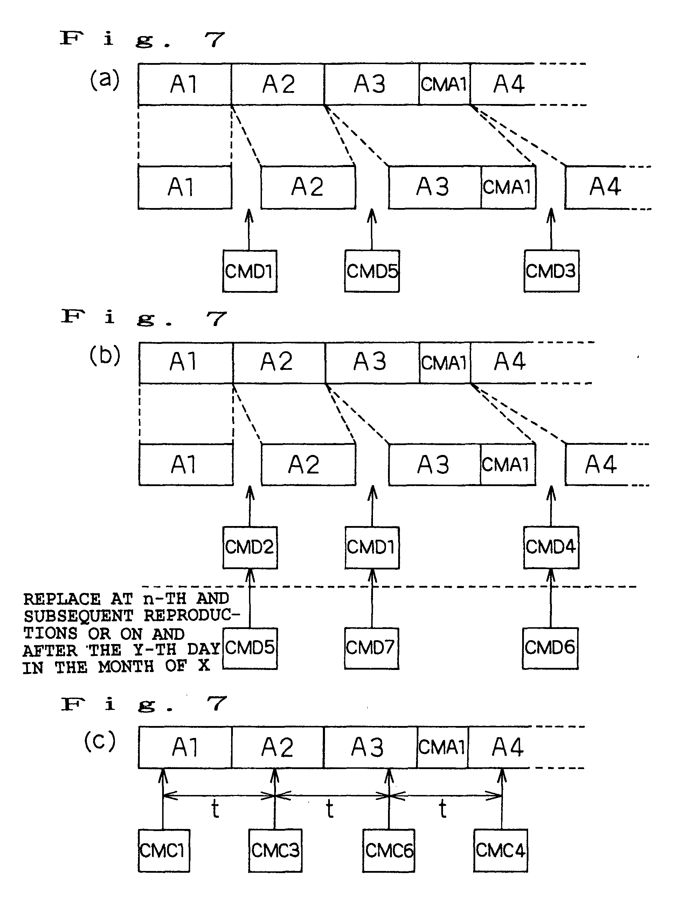

In Fig. 7(a), after the recording/reproducing unit 5 reproduces the program data stored in the HDD 6 and sends the program data to the data synthesizing unit 4, the AV decoder 8 decodes the program data and supplies the data to the display 13 and the speaker 12. As required by the advertisement beginning/ending flag inserted in the transport packet header of the program data, the CM data piece CMD1 is reproduced and inserted after the program data piece A1 and the subsequent program data piece A2 is delayed until the end of the CM data piece CMD1. After the program data piece A2, the subsequent CM data piece CMD5 is reproduced and inserted as required by the next advertisement beginning/ending flag.

In this manner, reproduction of program data is delayed if necessary and CM data are inserted in the meantime. Since the HDD 6 can be accessed at random, it is possible to freely change the order of reproducing CM data pieces.

Fig. 7(b) shows an example that when a certain program stored in the HDD 6 is reproduced a plurality of times or after a certain period of time, CM data to be inserted are substituted at an n-th and later reproductions or reproductions on and after a certain date. In this example, while CMD2, CMD1 and CMD4 are inserted initially as CM data, for an n-th and later reproductions or reproductions on and after an Y-th day in the month of X, these are changed to CM data pieces CMD5, CMD7 and CMD6 which will serve as CM data inserted at the same positions. This ensures that users always watch new advertisement.

Further, in the case of reproducing program data stored in the HDD 6 as well, similarly to the method described above in relation to program data being received (See Fig. 5.), it is possible to display CM data in a partial area of a main visual image or paste a banner advertisement on the monitor, at the time that a television set is turned on or a channel is switched, or alternatively, for every certain time period. Fig. 7 (c) is a drawing showing an example that CM data pieces CMC1, CMC3, CMC6 to be pasted and CMC4 are reproduced against the program data pieces A1, A2, ... for every certain time period t.

It is of course possible to appropriately select the contents of CM data to be reproduced, in accordance with geographical areas in which apparatuses for reproducing CM data are located, the age, the gender, the income levels of subscribers , etc. To this end, while personal identifications, personal information or the like regarding the individuals who use the reproducing apparatuses is necessary, such information may be acquired through IC cards, on-line, etc.

Further, if sponsors wish to avoid forwarding or skipping of advertisements for the purpose of ensuring that users watch the advertisements without fail, information to avoid forwarding or skipping may be added to a stream header or the like so that the advertisements will be reproduced inevitably.

An alternative to prevent advertisement data from being skipped may be to provide an audience who reproduces CM data without skipping with more benefit, such as a cheaper subscription rate, depending on to what extent CM data have been reproduced.

The "advertisement data" as referred to herein includes advertisement data which are stored in an advertisement area as well, and is not limited only to advertisements added to program data from the beginning.

### (Second Preferred Embodiment)

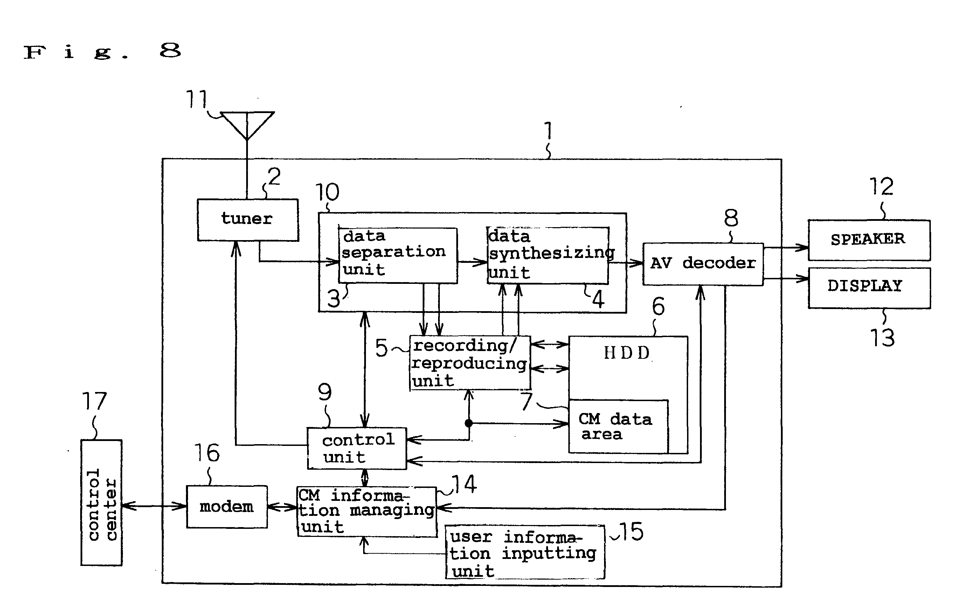

Fig. 8 is a structure diagram of an advertisement data reproducing apparatus according to a second preferred embodiment of the present invention. The structure according to the second preferred embodiment is characterized in that, in addition to the structure according to the first preferred embodiment, it is possible to return a feedback regarding reactions from users on advertisements or the like to a control center.

In Fig. 8, the STB 1 which serves as an advertisement data reproducing apparatus comprises: a tuner 2 which receives a digital television broadcast wave from a broadcasting station through an antenna 11 and converts into a signal which can be used within the STB 1; a data separation unit 3 which separates program data and CM data from each other which are multiplexed as digital broadcast data, in accordance with data attributes information which is sent together with the digital broadcast data; an HDD 6 which records and stores the separated program data and CM data; a recording/reproducing unit 5 which records and reproduces the program data and the CM data in and from the HDD 6; a data synthesizing unit 4 which synthesizes data reproduced from the HDD 6 by the recording/reproducing unit 5 with data from the data separation unit 3; an AV decoder 8 which decodes data processed by high-efficiency encoding and received from the data synthesizing unit 4 and outputs to a speaker 12 and a display 13; a control unit 9 which controls operations of these respective units; a CM information managing unit 14 which serves as advertisement information managing means of managing IDs of CM data which users watch and personal information regarding the users; a user information inputting unit 15 which serves as information of interest inputting means which inputs the personal information regarding the users, preferences of the users and the like; and a modem 16 which serves as advertisement information sending means of sending information to a control center 17 which manages various types of information regarding how the users see advertisements.

The HDD 6 includes a CM data area 7 which is dedicated to recording of CM data. Other areas are used to record program data. The data separation unit 3 and the data synthesizing unit 4 form a transport decoder 10.

Next, operations of the advertisement data reproducing apparatus according to the second preferred embodiment will be described with reference to the associated drawings.

First, basic operations are similar to those described earlier in relation to the first preferred embodiment, e.g., pasting or replacing of CM data while a television broadcast is being received and pasting or inserting of CM data while program data stored in the HDD 6 are being reproduced.

In the second preferred embodiment, IDs of CM data decoded by the AV decoder 8, namaly, IDs of advertisements considered to have been watched by users are sent to the CM information managing unit 14, and the IDs are thereafter stored. Following this, the IDs are sent to the control center 17 through the modem 16.

Compiling and analyzing the IDs of the advertisements sent from users , the control center 17 identifies which advertisement is popular, which advertisement records a high favorability, etc. Thus, the control center 17 (including a broadcasting company, etc.) can notify sponsors of a result of compiling or the like or even make a proposal on an effect of an advertisement or what kind of advertisement is desirable.

Further, with personal information, such as the age, the gender and hobbies, regarding the users entered via the user information inputting unit 15 and sent to and registered at the control center 17, it is possible to grasp user needs in more details.

Entry of the personal information regarding the users may be realized using ID cards or the like in which the personal information is recorded. In addition, since the individual users may only be identified once registration is made at the control center 17, identification may be realized by means of personal identification numbers, passwords, speech recognition, fingerprint recognition or the like.

Further, with a structure which allows to forward or skip advertisements on condition that one pays an additional charge in advance upon purchase of the STB 1 or pays an additional charge later, using a method that permits to forward or skip advertisements if a prepaid card is inserted, for instance, it is possible to send IDs of advertisements which user forwarded or skipped and did not watch to the control center 17, instead of sending IDs of advertisements which user watched. In addition, users may enter their likes and dislikes of advertisements via the user information inputting unit 15 and send the information to the control center 17. Still further, the control center 17 may permits to forward or skip advertisements based on this information.

Moreover, the user information may be sent from the control center 17 to sponsors, so that the sponsors can choose users to present advertisements to or brush up the contents of the advertisements more satisfactory based on advertisement viewing information regarding users and so that a broadcasting company, providing the advertisement viewing information, can obtain an income from the sponsors.

As a further approach, users who provide the advertisement viewing information to a broadcasting company may be rewarded with benefits such as a cheaper monthly subscription charge and a present. In addition, users who watched banner advertisements and purchased advertised products, after informing the control center 17 of this, may be rewarded with benefits such as a cheaper monthly subscription charge and a present.

A structure which omits the user information inputting unit 15 in the preferred embodiments above may be used.

### (Third Preferred Embodiment)

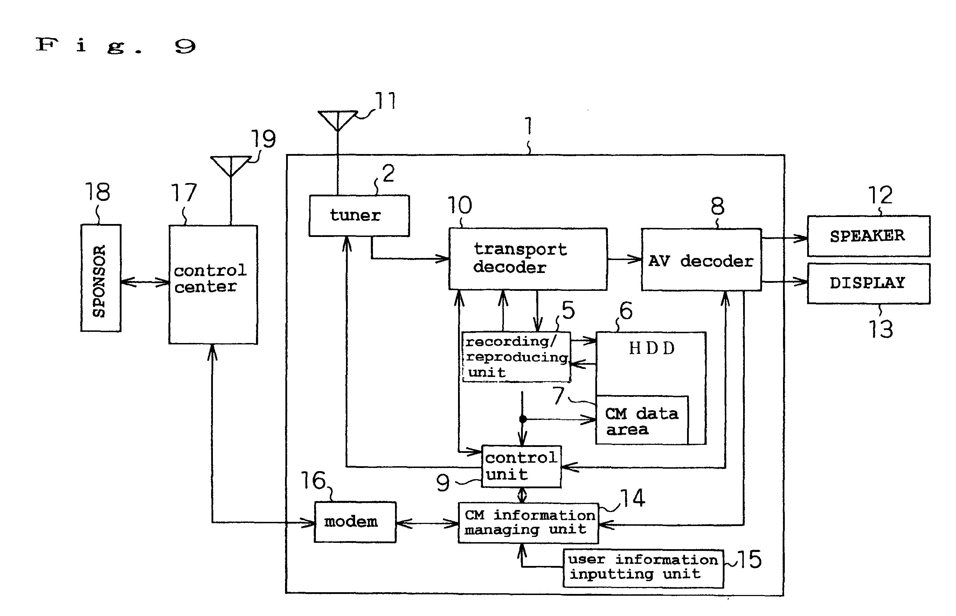

Fig. 9 is a schematic structure diagram of an advertisement data reproducing system according to a third preferred embodiment of the present invention. The third preferred embodiment, using the advertisement data reproducing apparatus according to the second preferred embodiment described above, is directed to a control center and sponsors (or only a control center in some cases) in a feedback system.

In Fig. 9, this system comprises: an STB 1 which comprises a tuner 2 which receives, through an antenna 11, a digital television broadcast wave from a sending antenna 19 of a broadcasting station which is located at a control center 17 and converts into a signal which can be used within the STB 1, a transport decoder 10 which separates program data and CM data from each other which are multiplexed as digital broadcast data and synthesizes program data and CM data, in accordance with data attributes information which is sent together with the digital broadcast data, an HDD 6 which records and stores the separated program data and CM data separated by the transport decoder 10, a recording/reproducing unit 5 which records and reproduces the program data and the CM data in and from the HDD 6, an AV decoder 8 which decodes data processed by high-efficiency encoding and received from the transport decoder 10 and outputs to a speaker 12 and a display 13, a control unit 9 which controls operations of these respective units, a CM information managing unit 14 which manages IDs of CM data watched by users and personal information regarding the users, a user information inputting unit 15 which inputs the personal information regarding the users , preferences of the users and the like, and a modem 16 which sends information to the control center 17 which manages various types of information regarding how the users see advertisements; the control center 17 which includes a broadcasting company; and a sponsor 18 who is connected to the control center 17.

The control center 17 and the sponsor 18 form an advertisement control center, or the control center 17 alone forms the advertisement control center.

The HDD 6 includes a CM data area 7 which is dedicated to recording of CM data. Other areas are used to record program data.

Next, operations of the advertisement data reproducing system according to the third preferred embodiment will be described with reference to the associated drawings.

Operations of the STB 1 are similar to those in the second preferred embodiment described above, and therefore, will not be described again.

As the control center 17 receives information regarding advertisements which users watched or in some cases advertisements forwarded or skipped by users, personal information regarding users such as the age and the gender, and other information which are sent through a modem 1 which is incorporated in the STB 1, the control center 17 sends a result of compiling and the like to the sponsor 18.

The sponsor 18 searches for advertisements which are proper to the respective programs or users or the like based on the information received from the control center 17, and notifies the control center 17.

The control center 17 selects CM data in accordance with the information from the sponsor 18, inserts the CM data into program data which are being broadcasted, and broadcasts the CM data on a channel dedicated to CM data. Alternatively, the control center 17 sends, together with program data, information for selecting desired CM data out of CM data which are stored in the STB 1. Hence, the control center 17 must be prepared such that CM data are classified and stored in advance in accordance with personal information or such that the sponsor 18 can provide CM data which are proper to users based on information received from the control center 17.

An alternative manner may be that the sponsor 18 provides the control center 17 with information regarding selection of advertisements which are proper to the respective programs and the respective users so that the control center 17 alone normally executes the processing by the method as above and the sponsor 18 when necessary updates the information regarding selection of advertisements which are proper to the respective programs and the respective users for the control center 17.

While an HDD is used as a large-capacity recording medium in the preferred embodiments above, this is not limiting. An optical disk, an optical magnetic disk or the like may be used instead of course, as far as those have a large capacity and can be accessed at random.

Further, although the second and the third preferred embodiments use a modem and connect by a telephone line for communication with the control center, other method such as bi-directional CATV may be used instead.

Further, the structure described in relation to the third preferred embodiment above is merely an example. Various types of structures are applicable structures which are within the intended scope of the present invention as long as advertisement viewing information regarding users is returned as a feedback and effective advertisements are presented to the respective users based on a result of the feedback. For instance, among applicable structures is one which permits the control center or a sponsor to reflect information regarding users who watched advertisements and purchased products.

Still further, while the respective units and the respective means are structured with dedicated hardware according to the preferred embodiments above, instead of this, similar functions may be realized with software using a computer or a recording medium which stores a program for executing these functions with a computer.

A medium according to the present invention is a program recording medium which stores a program and/or data for executing with a computer all or some functions of all or some means according to the present invention described above.

The program recording medium is characterized in that a computer can read the program recording medium and the functions are executed as the read program and/or data operate with the computer.

Alternatively, the program recording medium is characterized in storing a program and/or data for executing with a computer all or some operations at all or some steps according to the present invention described above.

The program recording medium is further characterized in that a computer can read the program recording medium and the functions are executed as the read program and/or data operate with the computer.

As clearly described above, an advantage of the present invention is that it is possible to present advertisements desired by an audience to different groups of audience, to provide more favorable advertisements , and to prevent a drop in audience rating on advertisements.

## Claims

1. An advertisement supplying method, characterized in that an area for recording advertisement data is crated in a large-capacity recording medium, advertisement data which are to be reproduced when an audience watch a program are recorded in said area in advance, and said large-capacity recording medium is thereafter provided.

2. An advertisement data supplying method, characterized in that a large-capacity recording medium in which a free area for recording advertisement data is created is provided, and after providing said medium, advertisement data which are to be reproduced when an audience watch a program are recorded in said free area of said large-capacity recording medium.

3. The advertisement data supplying method of claim 1, characterized in that for updating said advertisement data which are recorded in advance in said area for recording advertisement data, said advertisement data are provided by either one of or combination of a method which requires to load from a channel which is dedicated to advertisement data, a method which requires to load from the same channel for program data during an unoccupied period of said program data, a method which requires to extract from advertisement data which are added to program data and thereafter load, a method which requires to load through a different communication system from broadcasting of program data.

4. The advertisement data supplying method of claim 2, characterized in that said advertisement data are provided by either one of or combination of a method which requires to load from a channel which is dedicated to advertisement data, a method which requires to load from the same channel as program data during an unoccupied period of said program data, a method which requires to extract from advertisement data which are added to program data and thereafter load, a method which requires to load through a different communication system from broadcasting of program data.

5. The advertisement data supplying method of claim 2 or 4, characterized in that the capacity of said free area can be changed.

6. An advertisement data reproducing apparatus, characterized in comprising advertisement data reproducing means which reads said advertisement data from said large-capacity recording medium which is used in the advertisement supplying method of claim 1 or 2, and displays said advertisement data, for a predetermined period or all the times, in a partial area of a displayed view of program data which area being received.

7. An advertisement data reproducing apparatus, characterized in comprising advertisement data reproducing means which reads said advertisement data from said large-capacity recording medium which is used in the advertisement supplying method of claim 1 or 2, replaces advertisement data inserted in program data or a part or entirety of empty data with said recorded advertisement data during broadcasting of program data which are being received, and reproduces said recorded advertisement data.

8. The advertisement data reproducing apparatus of claim 7, characterized in that replacement of said advertisement data is performed using an advertisement beginning/ending flag which is created in a packet header of said program data.

9. An advertisement data reproducing apparatus, characterized in comprising advertisement data reproducing means which reads said advertisement data from said advertisement data area of said large-capacity recording medium which is used in the advertisement supplying method of claim 1 or 2 , and displays said advertisement data, during reproduction of program data which are recorded in said large-capacity recording medium, for a predetermined period or all the times, in a partial area of a displayed view of said program data.

10. An advertisement data reproducing apparatus, characterized in comprising advertisement data reproducing means which reads said advertisement data from said advertisement data area of said large-capacity recording medium which is used in the advertisement supplying method of claim 1 or 2, and during reproduction of program data which are recorded in said large-capacity recording medium, inserts and reproduces said advertisement data in said program data which are being reproduced.

11. The advertisement data reproducing apparatus of claim 9, characterized in that said advertisement data reproducing means replaces advertisement data already added to said program data with said advertisement data of said advertisement data area and reproduces said advertisement data of said advertisement data area.

12. The advertisement data reproducing apparatus of any one of claims 6 through 11, characterized in that said advertisement data are recorded in said advertisement data area or updated by either one of or combination of a method which requires to load from a channel which is dedicated to advertisement data, a method which requires to load from the same channel as program data during an unoccupied period of said program data, a method which requires to extract from advertisement data which are added to program data and thereafter load, a method which requires to load through a different communication system from broadcasting of program data.

13. The advertisement data reproducing apparatus of claim 10 or 11, characterized in that insertion or replacement of said advertisement data is performed using an advertisement beginning/ending flag which is created in a packet header of said program data.

14. The advertisement data reproducing apparatus of any one of claims 6 through 13, characterized in that an identifier not for inhibiting to display advertisement data is added to a packet header of said program data.

15. The advertisement data reproducing apparatus of any one of claims 6 through 14, characterized in comprising information of interest inputting means which inputs information of interest which an audience have regarding advertisements.

16. The advertisement data reproducing apparatus of any one of claims 6 through 15, characterized in comprising:
advertisement information managing means of managing ID information of advertisement data which were reproduced, forwarded without reproducing, or skipped without reproducing; and
advertisement information storing/sending means of internally storing at least said ID information or sending at least said ID information to outside.

17. The advertisement data reproducing apparatus of claim 16, characterized in that with a predetermined condition set, it is possible to forward or skip advertisement data without reproducing.

18. An advertisement data reproducing system, characterized in comprising an advertisement control center which receives information regarding reproduction of advertisements from said advertisement information storing/sending means of the advertisement data reproducing apparatus of claim 16 or 17 and manages and sends advertisement data based on said information received.

19. A sponsor system, characterized in comprising a sponsor apparatus which determines a user who is to be provided with the contents of an advertisement and/or an advertisement, based on said information regarding reproduction of advertisements received from said advertisement information storing/sending means of the advertisement data reproducing apparatus of claim 16 or 17 or from said advertisement control center of the advertisement data reproducing system of claim 18.

20. A program recording medium which can be read with a computer and which stores a program and/or data for executing with a computer all or some operations at all or some steps of the advertisement data supplying method of any one of claims 1 through 5.

21. Aprogram recording medium which can be read with a computer and which stores a program and/or data for executing with a computer all or some functions of all or some means of the advertisement data reproducing apparatus of any one of claims 6 through 17.
